# EUROPEAN PATENT APPLICATION

(11) **EP 2 578 605 A1**
(43) Date of publication of application: **10.04.2013**
(21) Application number: 11786667.3
(22) Date of filing: 25.05.2011
(51) Int. Cl.: C08F 4/646, C08F 4/6592

(54) **CATALYST COMPOSITION AND PROCESS FOR PRODUCTION OF OLEFIN POLYMERS USING THE CATALYST COMPOSITION**

(30) Priority: 25.05.2010 JP 2010119784
(71) Applicant: Idemitsu Kosan Co., Ltd., Chiyoda-ku Tokyo 100-8321 (JP)
(72) Inventor: YABUKAMI, Minoru, Ichihara-shi Chiba 299-0193 (JP); KANAMARU, Masami, Ichihara-shi Chiba 299-0193 (JP); FUJIMURA, Takenori, Ichihara-shi Chiba 299-0193 (JP); MINAMI, Yutaka, Ichihara-shi Chiba 299-0193 (JP)
(74) Representative: Vossius & Partner
(86) International application number: PCT/JP2011/061960
(87) International publication number: WO 2011/148968

(57) **Abstract**

The present invention provides a catalyst composition and a method for producing an olefin polymer using the catalyst composition. The catalyst composition is prepared by bringing (A) a transition metal compound, (B) a solid boron compound capable of forming an ion pair with the component (A), (C) an organometallic compound and (D) a compound represented by the following general formula (XIV) and/or the following general formula (XV) into contact with each other in a hydrocarbon solvent, and enables a high catalyst concentration.

Z⁵R¹⁴R¹⁵ (XIV)

Z⁶R¹⁴R¹⁵R¹⁶ (XV)

[In the formulae, Z⁵ represents an oxygen atom, etc.; Z⁶ represents a nitrogen atom, etc.; R¹⁴ to R¹⁶ each independently represent an organic group, and at least one of those organic groups is an organic group having at least 3 carbon atoms, and R¹⁴ to R¹⁶ may bond to each other to form a ring.]

## Description

### TECHNICAL FIELD

The present invention relates to a catalyst composition, more precisely to a catalyst composition containing specific components and capable of providing a high catalyst concentration, and to a method for producing an olefin polymer using the catalyst composition.

### BACKGROUND ART

For producing an olefin polymer, heretofore used is a catalyst comprising a transition metal compound such as a metallocene compound or the like and a promoter such as a boron compound or the like.
In many cases, however, a metallocene compound is a chlorine-containing compound and therefore, when the compound is used in industrial production of olefin polymers, hydrochloric acid may be generated in the deactivation step and may corrode the production apparatus.
Accordingly, it is desirable that the chlorine-containing metallocene compound is previously treated with a suitable organometallic compound and is thereby converted into an alkyl or alkoxymetallocene compound for use for the intended purpose.
In this case, the concern of production apparatus corrosion could extremely reduce, and inexpensive materials could be used for production apparatus.

In industrial polymerization, the metallocene compound, the boron compound and others are previously dissolved in a solvent and the resulting catalyst solution is put into the polymerization system in many cases.
In catalyst supply to a polymerization reactor, preferably, the main catalyst such as a metallocene compound or the like and a promoter such as a boron compound or the like are previously brought into contact with each other to provide a uniform and activated catalyst composition, rather than separately putting them into the reactor, because of the advantages that the catalyst supply unit can be simplified and the catalyst activity can be enhanced.
However, in case where the above-mentioned alkyl or alkoxymetallocene compound is reacted with a promoter to form an activated ionic compound, the ionic compound generally has poor solubility in a hydrocarbon solvent and may often precipitate therein, and therefore a uniform catalyst composition could not be obtained. It is difficult to supply such a nonuniform catalyst composition to a polymerization reactor.
In such a case, when an aromatic compound having a high polarity among hydrocarbon solvents is used, the ionic compound could be dissolved therein in a definite concentration range, therefore facilitating catalyst supply to the polymerization reactor.
However, in general, a nonaromatic solvent is used in polymerization, and therefore, the additional step of putting such an aromatic solvent-containing catalyst solution into the system, if any, would provide a possibility that the product after the polymerization (olefin polymer) may be contaminated with an impurity of the aromatic compound which is toxic and involves a great environmental load.
Consequently, it is desirable to prepare a high-concentration catalyst solution and to reduce the amount of the Catalyst solution to be put into the polymerization system.

In industrial polymerization, in general, the solvent is collected from the solution after the polymerization reaction, and is thereby recycled. Consequently, in repeating the reaction, the proportion of the aromatic solvent to the entire solvent increases, therefore often providing a problem of polymerization behavior change and a problem of product contamination with the aromatic compound.
For evading these problems, the polymerization solvent (nonaromatic solvent) and the catalyst preparation solvent (aromatic solvent) must be separated in a separation step of distillation or the like; however, it may be considered that, when the amount of the catalyst preparation solvent could be reduced, then the load in the separation step could also be reduced.
On the other hand, in case where the same nonaromatic solvent can be used both for the polymerization catalyst and for the catalyst preparation catalyst, then it is more desirable as not requiring any additional separation step.

For solving the above-mentioned problems, various technical developments have heretofore been made.
For example, Patent Reference 1 describes a boron compound supply method that comprises supplying a specific boron compound continuously into a reactor, while kept suspended or slurried in a solvent.
However, in actual use thereof, the method requires a complicated apparatus and therefore has an economic problem.
Patent References 2 to 6 describe a technique of enabling use of an aliphatic solvent by the use of a boron compound having a specific structure.
However, a complicated step is needed for producing the boron compound, and therefore the technique is impracticable in industrial aspects.
Patent References 7 and 8 describe preparing a uniform catalyst by bringing a transition metal compound and a boron compound in a hydrocarbon solvent in the presence or absence of an organic aluminium compound prior to polymerization.
However, the obtained catalyst composition could not be said to have a sufficiently high concentration.
In addition, use of an aromatic solvent is needed for securing the solubility, therefore additionally requiring a step of separating and collecting the solvent.
Patent Reference 9 describes a production method for an alkylmetallocene complex not containing a chlorine atom, and Non-Patent Reference 2 describes a production method for an alkoxymetallocene complex not containing a chlorine atom; however, these describe nothing relating to activation of the catalyst, polymerization reaction, etc.
Non-Patent Reference 1 describes a production method for an alkylmetallocene complex not containing a chlorine atom, and a production method for an ionic complex by activating the complex with a boron compound; however, the activated complex has poor solubility, and harmful toluene is used as the solvent.

### CITATION LIST

### PATENT REFERENCES

Patent Reference 1: JP 11-71410 A
Patent Reference 2: JP 2000-507157 A
Patent Reference 3: JP 2004-513193 A
Patent Reference 4: JP 2004-501989 A
Patent Reference 5: JP 2004-501228 A
Patent Reference 6: JP 2003-512515 A
Patent Reference 7: JP 8-34809 A
Patent Reference 8: JP 2918193 B2
Patent Reference 9: JP 2939321 B2

### NON-PATENT REFERENCES

Non-Patent Reference 1: Organometallics, 2007, Vo. 26, pp. 3018-3030
Non-Patent Reference 2: Organometallics, 2008, Vo. 27, pp. 5474-5487

### SUMMARY OF THE INVENTION

### PROBLEMS THAT THE INVENTION IS TO SOLVE

The present invention has been made in consideration of the above-mentioned situation, and its object is to provide a catalyst composition, which is obtained by bringing a transition metal compound, a boron compound, an organometallic compound and others into contact with each other, which has an increased solubility in a hydrocarbon solvent and can provide a high catalyst concentration, and which does not contain a chlorine compound, and to provide a method for producing an olefin polymer using the catalyst composition.

### MEANS FOR SOLVING THE PROBLEMS

The present inventors have made assiduous studies and, as a result, have found that when a catalyst composition is prepared by using an coordinate compound having a bulky structure, then the above-mentioned problems can be solved.
The present invention has been completed on the basis of the finding.
Specifically, the present invention provides the following:
1. A catalyst composition prepared by bringing the following components (A) to (D) into contact with each other in a hydrocarbon solvent:
   (A) A transition metal compound,
   (B) A solid boron compound capable of forming an ion pair with the component (A),
   (C) An organometallic compound,
   (D) A compound capable of coordinating with the metal atom in the component (A) and represented by a general formula (XIV) and/or a general formula (XV):

      Z⁵R¹⁴R¹⁵ (XIV)

      Z⁶R¹⁴R¹⁵R¹⁶ (XV)

      [wherein Z⁵ represents an oxygen atom, a sulfur atom or a selenium atom; Z⁶ represents a nitrogen atom, a phosphorus atom or an arsenic atom; R¹⁴ to R¹⁶ each independently represent an organic group, and at least one of those organic groups is an organic group having at least 3 carbon atoms, and R¹⁴ to R¹⁶ may bond to each other to form a ring];
2. The catalyst composition of the above 1, wherein:
   the concentration of the component (A) to the hydrocarbon solvent is from 1 to 100 µmol/ml,
   the ratio of the component (B) to the component (A) [(B)/(A)] by mol is from 1.0 to 5,
   the ratio of the component (C) to the component (A) [(C)/(A)] by mol is from 1.0 to 100, and
   the ratio of the component (D) to the component (A) [(D)/(A)] by mol is from 0.1 to 100;
3. The catalyst composition of the above 1 or 2, wherein the component (D) is a compound represented by a general formula (XVI) and/or a general formula (XVII):

   Z⁷R¹⁴R¹⁵ (XVI)

   Z⁸R¹⁴R¹⁵R¹⁶ (XVII)

   [wherein Z⁷ represents an oxygen atom; Z⁸ represents a nitrogen atom; and R¹⁴ to R¹⁶ have the same meanings as above];
4. The catalyst composition of any of the above 1 to 3, wherein the component (A) is a double crosslinked metallocene complex represented by a general formula (I):

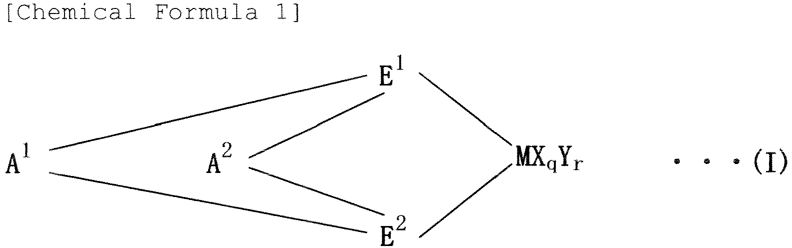

[wherein M represents titanium, zirconium or hafnium; E¹ and E² each represent a ligand comprising a substituted indenyl group and forms a crosslinked structure via A¹ and A², and these may be the same or different; X represents a σ-bonding ligand, and in case where the formula has multiple X's, the multiple X's may be the same or different, and may crosslink with any other X, E¹, E² or Y; Y represents a Lewis base, and in case where the formula has multiple Y's, the multiple Y's may be the same or different, and may crosslink with any other Y, E¹, E² or X; A¹ and A² each are a divalent crosslinking group that bonds the two ligands, representing a hydrocarbon group having from 1 to 20 carbon atoms, and these may be the same or different; q is an integer of from 1 to 5, indicating [(atomic valence of M) - 2]; and r indicates an integer of from 0 to 3]; the component (C) is an organic aluminium compound and/or an organic lithium compound; and the component (D) is a compound represented by a general formula (XVI):

Z⁷R¹⁴R¹⁵ (XVI)

[wherein Z⁷ represents an oxygen atom; and R¹⁴ and R¹⁵ have the same meanings as above];
5. The catalyst composition of any of the above 1 to 4, from which a chlorine compound has been removed;
6. A method for producing an olefin polymer, which comprises homopolymerization of an olefin or copolymerization of an olefin with any other olefin and/or other monomer, in the presence of the catalyst composition of any of the above 1 to 5.

### ADVANTAGE OF THE INVENTION

According to the present invention, there is provided a catalyst composition which is obtained by bringing a transition metal compound, a boron compound, an organometallic compound and others into contact with each other and which has an increased solubility in a hydrocarbon solvent and can provide a high catalyst concentration, and further, there is provided a catalyst composition which can provide a high catalyst concentration and which does not contain a chlorine compound.
Using the catalyst composition makes it possible to provide a catalyst composition in which the amount of the aromatic catalyst to be used and to provide a catalyst composition using a nonaromatic solvent, and consequently, and therefore makes it possible to reduce the amount of the remaining aromatic compound in an olefin polymer, and in case where the solvent is recycled, the catalyst composition can reduce the load in the aromatic solvent separation step, and in addition, can reduce the concern of production apparatus corrosion.
The activity of the catalyst composition of the present invention is, even though using a nonaromatic solvent, on the same level as that of the corresponding catalyst composition containing an aromatic solvent.

### MODE FOR CARRYING OUT THE INVENTION

The catalyst composition of the present invention is one prepared (obtained) by bringing (A) a transition metal compound, (B) a solid boron compound capable of forming an ion pair with the component (A), (C) an organometallic compound and (D) a compound capable of coordinating with the metal atom in the component (A) and represented by the general formula (XIV) and/or the general formula (XV) into contact with each other in a hydrocarbon solvent.

The transition metal compound (A) for use in the present invention includes a chelate complex, a metallocene complex having a non-crosslinked ligand or a crosslinked ligand, etc.
The chelate complex includes, for example, N,N'-bis(2,6-diisopropylphenyl)-1,2-dimethylethylenediiminonickel dibromide, N,N'-bis(2,6-diisopropylphenyl)-1,2-dimethylethylenediiminopalladium dibromide, etc.
The metallocene complex having a non-crosslinked ligand includes, for example, biscyclopentadienylzirconium dichloride, bis(n-butylcyclopentadienyl)zirconium dichloride, bis(pentamethylcyclopentadienyl)zirconium dichloride, bisindenylzirconium dichloride, bis(2-methylindenyl)zirconium dichloride, etc.
In the present invention, the polymerization activity of the metallocene complex in which the ligands form a crosslinked structure via a crosslinking group is higher than that of the metallocene complex in which the ligands do not form a crosslinked structure.
Of metallocene complexes, therefore, those in which the ligands form a crosslinked structure via a crosslinking group are preferred, monocrosslinked metallocene complexes and double crosslinked metallocene complexes are more preferred, and double crosslinked metallocene complex are most preferred.

The monocrosslinked metallocene compounds include dimethylsilylene(tetramethylcyclopentadienyl)(3-tert-butyl-5-methyl-2-phenoxy)zirconium dichloride, dimethylsilylene(tetramethylcyclopentadienyl)(tert-butylamide)zirconim dichloride, dimethylsilylenebis(2-methyl-4,5-benzindenyl)zirconium dichloride, dimethylsilylenebis(2-methyl-4-phenylindenyl)zirconium dichloride, dimethylsilylenebis(2-methyl-4-naphthylindenyl)zirconium dichloride, dimethylsilylenebis(2-methylindenyl)zirconium dichloride, ethylenebis(indenyl)zirconium dichloride, ethylenebis(2-methylindenyl)zirconium dichloride, etc., and those prepared by substituting zirconium in these compounds with titanium or hafnium.

Also mentioned are dimethylsilylene(2-methyl-4-phenylindenyl)(2-(2-furyl)-4-phenyl-indenyl)zirconium dichloride, dimethylsilylene(2-methyl-4-phenyl-4-hydroazureny)(2-(2-(5-methyl)-furyl)-4-phenyl-4-hydroazurenyl)zirconium dichloride, dimethylsilylene(2-methyl-4-phenyl-4-hydroazureny)(2-methyl-4-(2-(5-methyl)-thienyl)-4-hydroazurenyl)zirconium dichloride, dimethylsilylene(2-methyl-benzindenyl)(2-(2-(5-methyl)-furyl)-benzoindenyl)zirconium dichloride, dimethylsilylene(2-methyl-4-(2-thienyl)-indenyl)(2-isopropyl-4-(2-thienyl)indenyl)zirconium dichloride, dimethylsilylene(2-methyl-4-(2-(5-methyl)-thienyl)-indenyl) (2-isopropyl-4- (2-(5-methyl)-thienyl)-indenyl)zirconium dichloride, dimethylsilylene(2-methyl-4-(2-(5-t-butyl)-thienyl)-indenyl)(2-isopropyl-4-(2-(5-t-butyl)-thienyl)-indenyl)zirconium dichloride, and metallocene compounds corresponding to the above but having a tetrahydroindenyl skeleton in place of the indenyl skeleton therein.
Further mentioned are those prepared by substituting zirconium in the above-mentioned compounds with titanium or hafnium.

Further mentioned are dichloro[dimethylsilylene(cyclopentadienyl)(2,4-dimethyl-4H-1-azurenyl)]hafnium, dichloro[dimethylsilylene(cyclopentadienyl)(2,4-dimethyl-4H-5,6,7,8-tetrahydro-1-azurenyl)]hafnium, dichloro[dimethylsilylene(cyclopentadienyl)(2-ehtyl-4-methyl-4H-1-azurenyl)]hafnium, dichloro[dimethylsilylene(cyclopentadienyl)(2-ethyl-4-methyl-4H-5,6,7,8-tetrahydro-1-azurenyl)]hafnium, dichloro[dimethylsilylene(9-fluorenyl)(2,4-dimethyl-4H-1-azurenyl)]hafnium, dichloro[dimethylsilylene(cyclopentadienyl)(2-n-propyl-4-methyl-4H-2-azurenyl)]hafnium, dichloro[dimethylsilylene(cyclopentadienyl)(2-n-isopropyl-4-methyl-4H-1-azurenyl)]hafnium, dichloro[dimethylgermylene(cyclopentadienyl)(2,4-dimethyl-4H-1-azurenyl)]hafnium, and those prepared by substituting zirconium in the above-mentioned compounds with titanium or hafnium.

The double crosslinked metallocene complexes include those represented by the following general formula (I'):

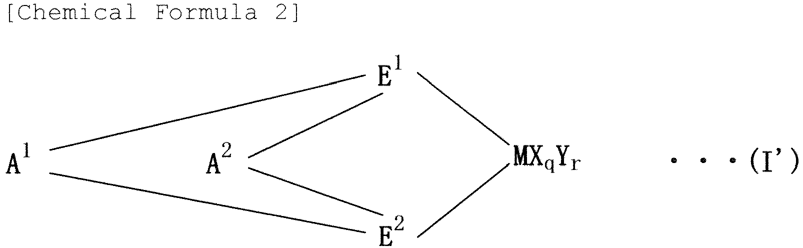

[In the formula, M represents a metal element of Groups 3 to 10 or lanthanoid series in the Periodic Table; E¹ and E² each represent a ligand selected from a substituted cyclopentadienyl group, an indenyl group, a substituted indenyl group, a heterocyclopentadienyl group, a substituted heterocyclopentadienyl group, an amide group, a phosphide group, a hydrocarbon group and a silicon-containing group, and forms a crosslinked structure via A¹ and A², and these may be the same or different; X represents a σ-bonding ligand, and in case where the formula has multiple X's, the multiple X's may be the same or different, and may crosslink with any other X, E¹, E² or Y; Y represents a Lewis base, and in case where the formula has multiple Y's, the multiple Y's may be the same or different, and may crosslink with any other Y, E¹, E² or X; A¹ and A² each are a divalent crosslinking group that bonds the two ligands, representing a hydrocarbon group having from 1 to 20 carbon atoms, a halogen-containing hydrocarbon group having from 1 to 20 carbon atoms, a silicon-containing group, a germanium-containing group, a tin-containing group, -O-, -CO-, -S-, -SO₂-, -Se-, -NR¹-, -PR¹-, -P(O)R¹-, -BR¹- or -AlR¹-; R¹ represents a hydrogen atom, a halogen atom, a hydrocarbon group having from 1 to 20 carbon atoms, or a halogen-containing hydrocarbon group having from 1 to 20 carbon atoms, and these may be the same or different; q is an integer of from 1 to 5, indicating [(atomic valence of M) - 2]; and r indicates an integer of from 0 to 3.]

In the general formula (I'), M represents a metal element of Groups 3 to 10 or lanthanoid series in the Periodic Table, and its specific examples include titanium, zirconium, hafnium, yttrium, vanadium, chromium, manganese, nickel, cobalt, palladium and lanthanoids metals, etc. Of those, preferred are titanium, zirconium and hafnium from the viewpoint of the olefin polymerization activity of the catalyst.
E¹ and E² each represent a ligand selected from a substituted cyclopentadienyl group, an indenyl group, a substituted indenyl group, a heterocyelopentadienyl group, a substituted heterocyclopentadienyl group, an amide group (-N<), a phosphide group (-P<), a hydrocarbon group [>CR-, >C<] and a silicon-containing group [>SiR-, >Si<] (in which R represents a hydrogen atom, or a hydrocarbon group or a hetero atom-containing group having from 1 to 20 carbon atoms), and forms a crosslinked structure via A¹ and A².
E¹ and E² may be the same or different.
As E¹ and E², preferred are a substituted cyclopentadienyl group, an indenyl group and a substituted indenyl group, since the polymerization activity of the catalyst could be higher.

X represents a σ-bounding ligand, and in case where the formula has multiple X's, the multiple X's may be the same or different, and may crosslink with any other X, E¹, E² or Y.
Specific examples of X include a halogen atom, a hydrocarbon group having from 1 to 20 carbon atoms, an alkoxy group having from 1 to 20 carbon atoms, an aryloxy group having from 6 to 20 carbon atoms, an amide group having from 1 to 20 carbon atoms, a silicon-containing group having from 1 to 20 carbon atoms, a phosphide group having from 1 to 20 carbon atoms, a sulfide group having from 1 to 20 carbon atoms, an acyl group having from 1 to 20 carbon atoms, etc.
On the other hand, Y represents a Lewis base, and in case where the formula has multiple Y's, the multiple Y's may be the same or different, and may crosslink with any other Y, E¹, E² or X. Specific examples of the Lewis base for Y include amines, ethers, phosphines, thioethers, etc.

Next, A¹ and A² each are a divalent crosslinking group that bonds the two ligands, representing a hydrocarbon group having from 1 to 20 carbon atoms, a halogen-containing hydrocarbon group having from 1 to 20 carbon atoms, a silicon-containing group, a germanium-containing group, a tin-containing group, -O-, -CO-, -S-, -SO₂-, -Se-, -NR¹-, -PR¹-, -P(O)R¹-, -BR¹- or -AlR¹-; R¹ represents a hydrogen atom, a halogen atom, a hydrocarbon group having from 1 to 20 carbon atoms, or a halogen-containing hydrocarbon group having from 1 to 20 carbon atoms, and these may be the same or different.
The crosslinking group of the type includes, for example, those represented by a general formula:

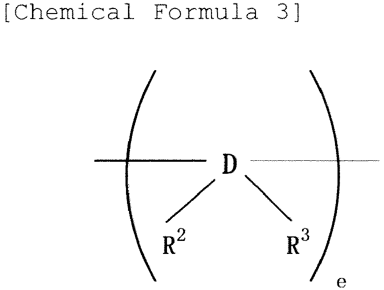

(D represents carbon, silicon or tin; R² and R³ each represent a hydrogen atom or a hydrocarbon group having from 1 to 20 carbon atoms, and these may be the same or different, and may bond to each other to form a ring structure. e indicates an integer of from 1 to 4.)
Specific examples of the group include a methylene group, an ethylene group, an ethylidene group, a propylidene group, an isopropylidene group, a cyclohexylidene group, a 1,2-cyclohexylidene group, a vinylidene group (CH₂=C=), a dimethylsilylene group, a diphenylsilylene group, a methylphenylsilylene group, a dimethylgermilene group, a dimethylstannylene group, a tetramethyldisilylene group, a diphenyldisilylene group, etc.
Of those, preferred are an ethylene group, an isopropylidene group and a dimethylsilylene group, as the polymerization activity of the catalyst could be higher.
q is an integer of from 1 to 5, indicating [(atomic valence of M) - 2]; and r indicates an integer of from 0 to 3.
Of the double crosslinked metallocene complexes represented by the general formula (I'), preferred are double crosslinked metallocene complexes represented by the general formula (I):

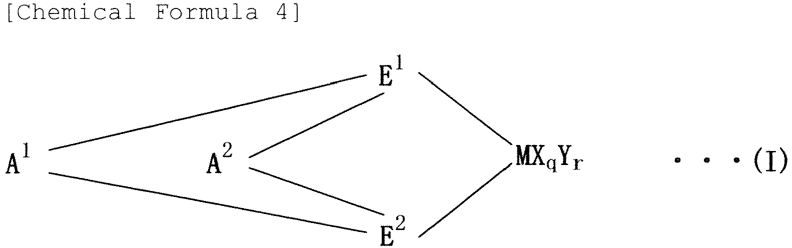

[wherein M represents titanium, zirconium or hafnium; E¹ and E² each represents a ligand comprising a substituted indenyl group and forms a crosslinked structure via A¹ and A², and these may be the same or different; X represents a σ-bonding ligand, and in case where the formula has multiple X's, the multiple X's may be the same or different, and may crosslink with any other X, E¹, E² or Y; Y represents a Lewis base, and in case where the formula has multiple Y's, the multiple Y's may be the same or different, and may crosslink with any other Y, E¹, E² or X; A¹ and A² each are a divalent crosslinking group that bonds the two ligands, representing a hydrocarbon group having from 1 to 20 carbon atoms, and these may be the same or different; q is an integer of from 1 to 5, indicating [(atomic valence of M) - 2]; and r indicates an integer of from 0 to 3], since the polymerization activity of the catalyst could be higher.
In the above-mentioned formula, preferably, the substituted indenyl group for E¹ and E² is a 3-trimethylsilylmethylindenyl group, the crosslinking group for A¹ and A² is a dimethylsilylene group, and the silicon-containing group having from 1 to 20 carbon atoms for X is a trimethylsilylmethyl group.

Specific examples of the double crosslinked metallocene complexes represented by the general formula (I') include (1,2'-dimethylsilylene)(2,1'-dimethylsilylene)(3-methylcyclopentadienyl)(3'-methylcyclopentadienyl)zirconium dichloride, (1,2'-dimethylsilylene)(2,1'-isopropylidene)(3-methylcyclopentadienyl)(3'-methylcyclopentadienyl)zirconium dichloride, (1,2'-dimethylsilylene)(2,1'-ethylene)(3-methylcyclopentadienyl)(3'-methylcyclopentadienyl)zirconium dichloride, (1,2'-ethylene)(2,1'-methylene)(3-methylcyclopentadienyl)(3'-methylcyclopentadienyl)zirconium dichloride, (1,2'-ethylene)(2,1'-isopropylidene)(3-methylcyclopentadienyl)(3'-methylcyclopentadienyl)zirconium dichloride, (1,2'-methylene)(2,1'-methylene)(3-methylcyclopentadienyl) (3'-methylcyclopentadienyl)zirconzum dichloride, (1,2'-methylene)(2,1'-isopropylidene)(3-methylcyclopentadienyl)(3'-methylcyclopentadienyl)zirconium dichloride, (1,2'-isopropylidene)(2,1'-isopropylidene)(3-methylcyclopentadienyl)(3'-methylcyclopentadienyl)zirconium dichloride,

(1,2'-dimethylsilylene)(2,1'-dimethylsilylene)(3,4-dimethylcyclopentadienyl)(3',4'-dimethylcyclopentadienyl)zirconium dichloride, (1,2'-dimethylsilylene)(2,1'-isopropylidene)(3,4-dimethylcyclopentadienyl)(3',4'-dimethylcyclopentadienyl)zirconium dichloride, (1,2'-dimethylsilylene)(2,1'-ethylene)(3,4-dimethylcyclopentadienyl)(3',4'-dimethylcyclopentadienyl)zirconium dichloride, (1,2'-ethylene)(2,1'-methylene)(3,4-dimethylcyclopentadienyl)(3',4'-dimethylcyclopentadienyl)zirconium dichloride, (1,2'-ethylene)(2,1'-isopropylidene)(3,4-dimethylcyclopentadienyl)(3',4'-dimethylcyclopentadienyl)zirconium dichloride, (1,2'-methylene)(2,1'-methylene)(3,4-dimethylcyclopentadienyl)(3',4'-dimethylcyclopentadienyl)zirconium dichloride, (1,2'-methylene)(2,1'-isopropylidene)(3,4-dimethylcyclopentadienyl)(3',4'-dimethylcyclopentadienyl)zirconium dichloride,

(1,2'-isopropylidene)(2,1'-isopropylidene)(3,4-dimethylcyclopentadienyl)(3',4'-dimethylcyclopentadienyl)zirconium dichloride, (1,2'-dimethylsilylene)(2,1'-dimethylsilylene)(3-methyl-5-ethylcyclopentadienyl)(3'-methyl-5'-ethylcyclopentadienyl)zirconium dichloride, (1,2'-dimethylsilylene)(2,1'-dimethylsilylene)(3-methyl-5-ethylcyclopentadienyl)(3'-methyl-5'-ethylcyclopentadienyl)zirconium dichloride, (1,2'-dimethylsilylene)(2,1'-dimethylsilylene)(3-methyl-5-isopropylcyclopentadienyl)(3'-methyl-5'-isopropylcyclopentadienyl)zirconium dichloride, (1,2'-dimethylsilylene)(2,1'-dimethylsilylene)(3-methyl-5-n-butylcyclopentadienyl)(3'-methyl-5'-n-butylcyclopentadienyl)zirconium dichloride, (1,2'-dimethylsilylene)(2,1'-dimethylsilylene)(3-methyl-5-phenylcyclopentadienyl)(3'-methyl-5'-phenylcyclopentadienyl)zirconium dichloride, (1,2'-dimethylsilylene)(2,1'-isopropylidene)(3-methyl-5-ethylcyclopentadienyl)(3'-methyl-5`-ethylcyclopentadienyl)zirconium dichloride,

(1,2'-dimethylsilylene)(2,1'-isopropylidene)(3-methyl-5-isopropylcyclopentadienyl)(3'-methyl-5'-isopropylcyclopentadienyl)zirconium dichloride, (1,2'-dimethylsilylene)(2,1'-isopropylidene)(3-methyl-5-n-butylcyclopentadienyl)(3'-methyl-5'-n-cyclopentadienyll)zirconium dichloride, (1,2'-dimethylsilylene)(2,1'-isopropylidene)(3-methyl-5-phenylcyclopentadienyl)(3'-methyl-5'-phenylcyclopentadienyl)zirconium dichloride, (1,2'-dimethylsilylene)(2,1'-ethylene)(3-methyl-5-ethylcyclopentadienyl)(3'-methyl-5'-ethylcyclopentadienyl)zirconium dichloride, (1,2'-dimethylsilylene)(2,1'-ethylene)(3-methyl-5-isopropylcyclopentadienyl)(3'-methyl-5'-isopropylcyclopentadienyl)zirconium dichloride, (1,2'-dimethylsilylene)(2,1'-ethylene)(3-methyl-5-n-butylcyclopentadienyl)(3'-methyl-5'-n-butylcyclopentadienyl)zirconium dichloride,

(1,2'-dimethylsilylene)(2,1'-ethylene)(3-methyl-5-phenylcyclopentadienyl)(3'-methyl-5'-phenylcyclopentadienyl)zirconium dichloride, (1,2'-dimethylsilylene)(2,1'-methylene)(3-methyl-5-ethylcyclopentadienyl)(3'-methyl-5'-ethylcyclopentadienyl)zirconium dichloride, (1,2'-dimethylsilylene)(2,1'-methylene)(3-methyl-5-isopropylcyelopentadienyl)(3'-methyl-5'-isopropylcyclopentadienyl)zirconium dichloride, (1,2'-dimethylsilylene)(2,1'-methylene)(3-methyl-5-n-butylcyclopentadienyl)(3'-methyl-5'-n-butylcyclopentadienyl)zirconium dichloride, (1,2'-dimethylsilylene)(2,1'-methylene)(3-methyl-5-phenylcyelopentadienyl)(3'-methyl-5'-phenylcyclopentadienyl)zirconium dichloride, (1,2'-ethylene)(2,1'*-methylene)(3-methyl-5-isopropylcyclopentadienyl)(3'-methyl-5'-isopropylcyclopentadienyl)zirconium dichloride, (1,2'-ethylene)(2,1'-isopropylidene)(3-methyl-5-isopropylcyclopentadienyl)(3'-methyl-5'-isopropylcyclopentadienyl)zirconium dichloride, (1,2'-methylene)(2,1'-methylene)(3-methyl-5-isopropylcyclopentadienyl)(3'-methyl-5'-isopropylcyclopentadienyl)zirconium dichloride, (2,2'-methylene)(2,1'-isopropylidene)(3-methyl-5-isopropylcyclopentadienyl)(3'-methyl-5'-isopropylcyclopentadienyl)zirconium dichloride,

(1,2'-ethylene)(2,1'-ethylene)-bis(indenyl)zirconium dichloride, (1,2'-methylene)(2,1'-methylene)-bis(indenyl)zirconium dichloride, (1,2'-isopropylidene)(2,1'-isopropylidene)-bis(indenyl)zirconium dichloride, (1,2'-ethylene)(2,1'-isopropylidene)-bis(indenyl)zirconium dichloride, (1,2'-methylene)(2,1'-ethylene)-bis(indenyl)zirconium dichloride, (1,2'-methylene)(2,1'-isopropylidene)-bis(indenyl)zirconium dichloride, (1,2'-dimethylsilylene)(2,1'-dimethylsilylene)-bis(indenyl)zirconium dichloride, (1,2'-dimethylsilylene)(2,1'-isopropylidene)-bis(indenyl)zirconium dichloride, (1,2'-dimethylsilylene)(2,1'-methylene)-bis(indenyl)zirconium dichloride, (1,1'-dimethylsilylene)(2,2'-dimethylsilylene)-bisindenylzirconium dichloride, (1,1'-diphenylsilylene)(2,2'-dimethylsilylene)-bisindenylzirconium dichloride, (1,1'-dimethylsilylene)(2,2'-dimethylsilylene)-bisindenylzirconium dichloride, (1,1'-diisopropylsilylene)(2,2'-dimethylsilylene)-bisindenylzirconium dichloride,

(1,1'-diisopropylsilylene)(2,2'-diisopropylsilylene)-bisindenylzirconium dichloride, (1,2'-diphenylsilylene)(2,1'-methylene)-bis(indenyl)zirconium dichloride,

(1,1'-dimethylsilylenindenyl)(2,2'-dimethylsilylene-3-trimethyylsilylindenyl)zirconium dichloride, (1,1'-diphenylsilylenindenyl)(2,2'-diphenylsilylene-3-trimethylsilylindenyl)zirconium dichloride, (1,1'-diphenylsilylenindenyl)(2,2'-dimethylsilylene-3-trimethylsilylindenyl)zirconium dichloride, (1,1'-dimethylsilylenindenyl)(2,2'-diphenylsilylene-3-trimethylsilylindenyl)zirconium dichloride, (1,1'-diisopropylsilylenindenyl)(2,2'-diphenylsilylene-3-trimethylsilylindenyl)zirconium dichloride, (1,1'-dimethylsilylenindenyl)(2,2'-diisopropylsilylene-3-trimethylsilylindenyl)zirconium dichloride, (1,1'-diisopropylsilylenindenyl)(2,2'-diisopropylsilylene-3-trimethylsilylindenyl)zirconium dichloride, (1,1'-dimethylsilylenindenyl)(2,2'-dimethylsilylene-3-trimethylsilylmethylindenyl)zirconium dichloride, (1,1'-diphenylsilylenindenyl)(2,2'-diphenylsilylene-3-trimethylsilylmethylindenyl)zirconium dichloride,

(1,1'-diphenylsilylenindenyl) (2,2'-dimethylsilylene-3-trimethylsilylmethylindenyl)zirconium dichloride, (1,1'-dimethylsilylenindenyl)(2,2'-diphenylsilylene-3-trimethylsilylmethylindenyl)zirconium dichloride, (1,1'-diisopropylsilylenindenyl)(2,2'-dimethylsilylene-3-trimethylsilylmethylindenyl)zirconium dichloride, (1,1'-dimethylsilylenindenyl)(2,2'-diisopropylsilylene-3-trimethylsilylmethylindenyl)zirconium dichloride, (1,1'-diisopropylsilylenindenyl)(2,2'-diisopropylsilylene-3-trimethylsilylmethylindenyl)zirconium dichloride,

(1,2'-ethylene)(2,1'-ethylene)-bis(3-methylindenyl)zirconium dichloride, (1,2'-ethylene)(2,1'-ethylene)-bis(4,5-benzindenyl)zirconium dichloride, (1,2'-ethylene)(2,1'-ethylene)-bis(4-isopropylindenyl)zirconium dichloride, (1,2'-ethylene)(2,1'-ethylene)-bis(5,6-dimethylindenyl)zirconium dichloride, (1,2'-ethylene)(2,1'-ethylene)-bis(4,7-diisopropylindenyl)zirconium dichloride, (1,2'-ethylene)(2,1'-ethylene)-bis(4-phenylindenyl)zirconium dichloride, (1,2'-ethylene)(2,1'-ethylene)-bis(3-methyl-4isopropylindenyl)zirconium dichloride, (1,2'-ethylene)(2,1'-ethylene)-bis(5,6-benzindenyl)zirconium dichloride, (1,2'-dimethylsilylene)(2,1'-dimethylsilylene)-bis(3-methylindenyl)zirconium dichloride, (1,2'-dimethylsilylene) (2,1'-dimethylsilylene)-bis(3-n-butylindenyl)zirconium dichloride, (1,2'-dimethylsilylene)(2,1'-dimethylsilylene)-bis(3-isopropylindenyl)zirconium dichloride,

(1,2'-dimethylsilylene)(2,1'-dimethylsilylene)-bis(3-trimethylsilylmethylindenyl)zirconium dichloride, (1,2'-dimethylsilylene)(2,1'-dimethylsilylene)-bis(3-phenylindenyl)zirconium dichloride, (1,2'-dimethylsilylene)(2,1'-dimethylsilylene)-bis(4,5-benzindenyl)zirconium dichloride, (1,2'-dimethylsilylene)(2,1'-dimethylsilylene)-bis(4-isopropylindenyl)zirconium dichloride, (1,2'-dimethylsilylene)(2,1'-dimethylsilylene)-bis(5,6-dimethylindenyl)zirconium dichloride, (1,2'-dimethylsilylene)(2,1'-dimethylsilylene)-bis(4,7-di-isopropylindenyl)zirconium dichloride, (1,2'-dimethylsilylene)(2,1'-dimethylsilylene)-bis(4-phenylindenyl)zirconium dichloride, (1,2'-dimethylsilylene)(2,1'-dimethylsilylene)-bis(3-methyl-4-isopropylindenyl)zirconium dichloride, (1,2'-dimethylsilylene)(2,1'-dimethylsilylene)-bis(5,6-benzindenyl)zirconium dichloride, (1,2'-dimethylsilylene)(2,1'-isopropylidene)-bis(3-methylindenyl)zirconium dichloride,

(1,2'-dimethylsilylene)(2,1'-isopropylidene)-bis(3-isopropylindenyl)zirconium dichloride, (1,2'-dimethylsilylene)(2,1'-isopropylidene)-bis(3-n-butylindenyl)zirconium dichloride, (1,2'-dimethylsilylene)(2,1'-isopropylidene)-bis(3-trimethylsilylmethylindenyl)zirconium dichloride, (1,2'-dimethylsilylene)(2,1'-isopropylidene)-bis(3-trimethylsilylindenyl)zirconium dichloride, (1,2'-dimethylsilylene)(2,1'-isopropylidene)-bis(3-phenylindenyl)zirconium dichloride, (1,2'-dimethylsilylene)(2,1'-methylene)-bis(3-methylindenyl)zirconium dichloride, (1,2'-dimethylsilylene)(2,1'-methylene)-bis(3-isopropylindenyl)zirconium dichloride, (1,2'-dimethylsilylene)(2,1'-methylene)-bis(3-n-butylindenyl)zirconium dichloride, (1,2'-dimethylsilylene)(2,1'-methylene)-bis(3-trimethylsilylmethyl)zirconium dichloride, (1,2'-dimethylsilylene)(2,1'-methylene)-bis(3-trimethylsilylindenyl)zirconium dichloride,

(1,2'-diphenylsilylene)(2,1'-methylene)-bis(3-methylindenyl)zirconium dichloride, (1,2'-diphenylsilylene)(2,1'-methylene)-bis(3-isopropylindenyl)zirconium dichloride, (1,2'-diphenylsilylene)(2,1'-methylene)-bis(3-n-butylindenyl)zirconium dichloride, (1,2'-diphenylsilylene)(2,1'-methylene)-bis(3-trimethylsilylmethylindenyl)zirconium dichloride, (1,2'-diphenylsilylene)(2,1'-methylene)-bis(3-trimethylsilylindenyl)zirconium dichloride, (1,1-diphenylsilylene)(2,2-dimethylsilylene)-bis(3-trimethylsilylmethylindenyl)zirconium
di(trimethylsilylmethyl), (1,2'-diphenylsilylene)(2,1'-dimethylsilylene)-bis(3-trimethylsilylmethylindenyl)zirconium
di(trimethylsilylmethyl), etc., and those prepared by substituting zirconium in these compounds with titanium or hafnium.
Needless-to-say, the invention is not limited to the above.
Similar compounds with a metal element of any other Group or lanthanoids series are also usable here.
In the above-mentioned compounds, (1,1'-)(2,2') may be (1,2'-) (2,1'-), and (1,2'-) (2,1'-) may be (1,1'-) (2,2'-).

The component (B) for use in the invention, solid organic boron compound capable of forming an ion pair with the component (A) includes a coordinate complex compound that comprises an anion with multiple groups bonding to boron and a cation.
For example, preferred for use herein are compounds represented by a general formula (III) or a general formula (IV).

([L¹-H]^{s+})ₜ([BZ¹Z²Z³Z⁴]⁻)₁ (III)

([L²])^{s+})ₜ([BZ¹Z²Z³Z⁴]⁻)₁ (IV)

[In the formula (III) or (IV), L² represents M¹, R⁴R⁵M² or R⁶₃C mentioned below; L¹ represents a Lewis base; M¹ represents a metal selected from Group 1 and Group 8 to Group 12 in the Periodic Table; M² represents a metal selected from Group 8 to Group 10 in the Periodic Table; Z¹ to Z⁴ each represent a hydrogen atom, a dialkylamino group, an alkoxy group, an aryloxy group, an alkyl group having from 1 to 20 carbon atoms, an aryl group having from 6 to 20 carbon atoms, an alkylaryl group, an arylalkyl group, a substituted alkyl group, an organic metalloid group or a halogen atom.
R⁴ and R⁵ each represent a cyclopentadienyl group, a substituted cyclopentadienyl group, an indenyl group or a fluorenyl group; R⁶ represents an alkyl group.
s is an integer of from 1 to 7, indicating the ionic valence of L¹-H or L²; t indicates an integer of 1 or more; and 1 = t x s).]

M¹ represents a metal selected from Group 1 and Group 8 to Group 12 in the Periodic Table, and its specific examples include atoms of Ag, Cu, Na, Li, etc. M² represents a metal selected from Group 8 to Group 10 in the Periodic Table, and its specific examples include atoms of Fe, Co, Ni, etc.
Regarding specific examples of Z¹ to Z⁴, for example, the dialkylamino group includes a dimethylamino group, a diethylamino group, etc.; the alkoxy group includes a methoxy group, an ethoxy group, an n-butoxy group, etc.; the aryloxy group includes a phenoxy group, a 2,6-dimethylphenoxy group, a naphthyloxy group, etc.; the alkyl group having from 1 to 20 carbon atoms includes a methyl group, an ethyl group, a n-propyl group, an isopropyl group, an n-butyl group, an n-octyl group, a 2-ethylhexyl group, etc.; the aryl group having from 6 to 20 carbon atoms, the alkylaryl group or the arylalkyl group includes a phenyl group, a p-tolyl group, a benzyl group, a pentafluorophenyl group, a 3,5-di(trifluoromethyl)phenyl group, a 4-tertiary butylphenyl group, a 2,6-dimethylphenyl group, a 3,5-dimethylphenyl group, a 2,4-dimethylphenyl group, a 1,2-dimethylphenyl group; the halogen includes F, Cl, Br, I; the organic metalloid group includes a tetramethylantimony group a trimethylsilyl group, a trimethylgermyl group, a diphenylarsine group, a dicyclohexylantimony group, a diphenylboron group, etc.
Specific examples of the substituted cyclopentadienyl group to be represented by R⁴ and R⁵ include a methylcyclopentadienyl group, a butylcyclopentadienyl group, a pentamethylcyclopentadienyl group, etc.

In the present invention, the anion with multiple groups bonding to a metal concretely includes B(C₆F₅)₄, B(C₆HF₄)₄⁻, B(C₆H₂F₃)₄⁻, B(C₆H₃F₂)₄⁻, B(C₆H₄F)₄⁻, B(C₆CF₃F₄)₄⁻, B(C₆H₅)₄⁻, BF₄⁻, etc.
The metal cation includes Cp₂Fe⁺, (MeCp)₂Fe⁺, (tBuCp)₂Fe⁺, (Me₂Cp)₂Fe⁺, (Me₃Cp)₂Fe⁺, (Me₄Cp)₂Fe⁺, (Me₅Cp)₂Fe⁺, Ag⁺, Na⁺, Li⁺, etc.; and as other cations, there are mentioned nitrogen-containing compounds, such as pyridinium, 2,4-dinitro-N,N-diethylanilinium, diphenylammonium, p-nitroanilinium, 2,5-dichloroaniline, p-nitro-N,N-dimethylanilinium, quinolinium, N,N-dimethylanilinium, N,N-diethylanilinium, etc.; carbenium compounds, such as triphenyl carbenium, tri(4-methylphenyl) carbenium, tri(4-methoxyphenyl) carbenium, etc.; alkylphosphonium ions, such as CH₃PH₃⁺, C₂H₅PH₃⁺, C₃H₇PH₃⁺, (CH₃)₂PH₂⁺, (C₂H₅)₂PH₂⁺, (C₃H₇)₂PH₂⁺, (CH₃)₃PH⁺, (C₂H₅)₃PH⁺, (C₃H₇)₃PH⁺, (CF₃)₃PH⁺, (CH₃)₄P⁺, (C₂H₅)₄P⁺, (C₃H₇)₄P⁺, etc.; and arylphosphonium ions, such as C₆H₅PH₃⁺, (C₆H₅)₂PH₂⁺, (C₆H₅)₃PH⁺, (C₆H₅)₄P⁺, (C₂H₅)₂(C₆H₅)PH⁺, (CH₃)(C₆H₅)PH₂⁺, (CH₃)₂(C₆H₅)PH⁺, (C₂H₅)₂(C₆H₅)₂P⁺, etc.
In the present invention, there are mentioned coordinate complex compounds comprising a combination of the above-mentioned metal cation and anion.

Of the compounds of the general formula (III) and the general formula (IV), those mentioned below are especially preferably used here.
As the compounds of the general formula (III), for example, there are mentioned triethylammonium tetraphenylborate, tri(n-butyl)ammonium tetraphenylborate, trimethylammonium tetraphenylborate, triethylammonium tetrakis(pentafluorophenyl)borate, tri(n-butylammonium) tetrakis(pentafluorophenyl)borate, triethylammonium hexafluoroarsenate, pyridinium tetrakis(pentafluorophenyl)borate, pyrrolinium tetrakis(pentafluorophenyl)borate, N,N-dimethylanilinium tetrakis(pentafluorophenyl)borate, methyldiphenylammonium tetrakis(pentafluorophenyl)borate, etc.
On the other hand, as the compounds of the general formula (IV), for example, there are mentioned ferrocenium tetraphenylborate, dimethylferrocenium tetrakis(pentafluorophenyl)borate, ferrocenium tetrakis(pentafluorophenyl)borate, decamethylferrocenium tetrakis(pentafluorophenyl)borate, acetylferrocenium tetrakis(pentafluorophenyl)borate, formylferrocenium tetrakis(pentafluorophenyl)borate, cyanoferrocenium tetrakis(pentafluorophenyl)borate, silver tetraphenylborate, silver tetrakis(pentafluorophenyl)borate, trityl tetraphenylborate, trityl tetrakis(pentafluorophenyl)borate, silver tetrafluoroborate, etc.
Preferred coordinate complex compounds comprise a non-coordinate anion and a substituted triaryl carbenium, in which the non-coordinate anion includes, for example, compounds represented by a general formula (V):

(BZ¹Z³Z⁴)⁻ (V)

[In the formula, Z¹ to Z⁴ each represent a hydrogen atom, a dialkylamino group, an alkoxy group, an aryloxy group, an alkyl group having from 1 to 20 carbon atoms, an aryl group having from 6 to 20 carbon atoms (including a halogen-substituted aryl group), an alkylaryl group, an arylalkyl group, a substituted alkyl group, an organic metalloid group or a halogen atom.]

On the other hand, the substituted triaryl carbenium, includes, for example, compounds represented by a general formula (VI):

[CR⁷R⁸R⁹]⁺ (VI)

In the general formula (VI), R⁷, R⁸ and R⁹ each represent an aryl group, such as a phenyl group, a substituted phenyl group, a naphthyl group, an anthracenyl group, etc.; and these may be the same or different, but at least one of them is a substituted phenyl group, a naphthyl group or an anthracenyl group.

The substituted phenyl group is, for example, represented by a general formula (VII):

C₆H_{5-y}R¹⁰ₖ (VII)

In the general formula (VII), R¹⁰ represents a hydrocarbyl group having from 1 to 10 carbon atoms, an alkoxy group, an aryloxy group, a thioalkoxy group, a thioaryloxy group, an amino group, an amide group, a carboxyl group or a halogen atom; and k indicates an integer of from 1 to 5.
In case where k is 2 or more, multiple R¹⁰'s may be the same or different.

Specific examples of the non-coordinate anion represented by the general formula (V) include tetra(fluorophenyl)borate, tetrakis(difluorophenyl)borate, tetrakis(trifluorophenyl)barate, tetrakis(tetrafluorophenyl)borate, tetrakis(pentafluorophenyl)borate, tetrakis(trifluoromethylphenyl)borate, tetra(toluyl)borate, tetra(xylyl)borate, (triphenyl, pentafluorophenyl)borate, [tris(pentafluorophenyl), phenyl]borate, tridecahydride-7,8-dicarbaundecaborate, etc.

Specific examples of the substituted triarylcarbenium represented by the general formula (VI) include tri(toluyl)carbenium, tri(methoxyphenyl)carbenium, tri(chlorophenyl)carbenium, tri(fluorophenyl)carbenium, tri(xylyl)carbenium, [di(toluyl), phenyl]carbenium, [di(methoxyphenyl), phenyl]carbenium, [di(chlorophenyl), phenyl]carbenium, [toluyl, di(phenyl)]carbenium, [methoxyphenyl, di(phenyl)]carbenium, [chlorophenyl, di(phenyl)]carbenium, etc.

The organometallic compound (C) for use in the present invention is a compound containing a metal of Group 1, Group 2, Group 12 or Group 13 in the Periodic Table, and above all, organic lithium compounds, organic sodium compounds, organic potassium compounds, organic beryllium compounds, organic magnesium compounds, organic calcium compounds, organic zinc compounds, organic cadmium compounds, organic mercury compounds, organic boron compounds, organic aluminium compounds, organic gallium compounds and the like are especially preferred from the viewpoint of the reactivity thereof.
Having especially good reactivity, more preferred compounds are organic lithium compounds, organic magnesium compounds, organic zinc compounds, organic aluminium compounds.
When any other compound than the above is used, sufficient reaction could not be secured.

The organic aluminium compounds include those represented by a general formula (VIII):

R¹¹ᵥAlJ₃₋ᵥ (VIII)

[In the formula, R¹¹ represents an alkyl group having from 1 to 10 carbon atoms; J represents a hydrogen atom, an alkoxy group having from 1 to 20 carbon atoms, an aryl group having from 6 to 20 carbon atoms, or a halogen atom; v indicates an integer of from 1 to 3.]
Specific examples of the compounds represented by the general formula (VIII) include trimethylaluminium, triethylaluminium, triisopropylaluminium, triisobutylaluminium, dimethylaluminium chloride, diethylaluminium chloride, methylaluminium dichloride, ethylaluminium dichloride, dimethylaluminium fluoride, diisobutylaluminium hydride, diethylaluminium hydride, ethylaluminium sesqui-chloride, trimethoxyaluminium, triethoxyaluminium, tripropoxyaluminium, triisopropoxyaluminium, tributoxyaluminium, triphenoxyaluminium, etc.
One alone or two or more different types of these organoaluminium compounds may be used here either singly or as combined.

As the organic aluminium compounds, further mentioned are linear aluminoxanes represented by a general formula (IX):

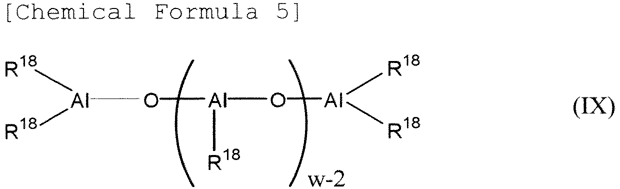

(wherein R¹⁸ represents a hydrocarbon group, such as an alkyl group, an alkenyl group, an aryl group, an arylalkyl group or the like having from 1 to 20 carbon atoms, preferably from 1 to 12 carbon atoms, or represents a halogen atom; w indicates a mean degree of polymerization, and is generally an integer of from 2 to 50, preferably from 2 to 40; and R¹⁸'s may be the same or different); and cyclic aluminoxanes represented by a general formula (X):

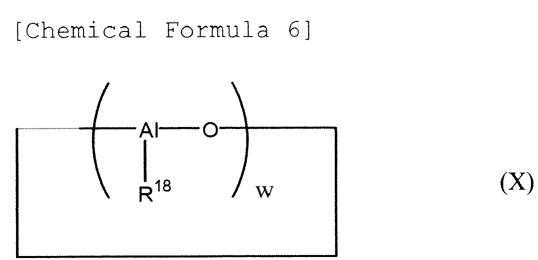

(wherein R¹⁸ and w have the same meanings as in the above-mentioned general formula (IX)).
The compounds represented by the general formulae (IX) and (X) include linear or cyclic alumoxanes, such as tetramethyldialumoxane, tetraisobutyldialumoxane, methylalumoxane, ethylalumoxane, butylalumoxane, isobutylalumoxane, etc.
The method for producing aluminoxanes includes a method for bringing an alkylaluminium into contact with a condensing agent, such as water or the like, but there is no specific limitation on the method. The reactants may be reacted according to any known method.
One alone or two or more different types of such aluminoxanes may be used here either singly or as combined.
As the organic aluminium compound, preferred is the compounds represented by the general formula (VIII) from the viewpoint of the solubility thereof in hydrocarbon solvents; and more preferred is triisobutylaluminium.

As the organic magnesium compounds, herein mentioned are those represented by a general formula (XI):

R¹³-Mg-X (XI)

X in the general formula (XI) includes a chlorine atom, a bromine atom, an iodine atom, an alkoxy group having from 1 to 20 carbon atoms, and an aryloxy group having from 1 to 20 carbon atoms.
Specific examples of the alkoxy group having from 1 to 20 carbon atoms and the aryloxy group having from 1 to 20 carbon atoms include an alkoxy group, such as a methoxy group, an ethoxy group, a propoxy group, an isopropoxy group, a cyclopropoxy group, a butoxy group, a sec-butoxy group, a tert-butoxy group, a cyclobutoxy group, a pentoxy group, a cyclopentoxy group, a hexoxy group, a cyclohexoxy group, etc.; and an aryloxy group, such as a phenoxy group, a naphthoxy group, etc.
R¹³ may also be an organic group having from 1 to 20 carbon atoms, and may have any of a linear structure, a branched structure, a cyclic structure or an aromatic structure. Concretely, there are mentioned an alkyl group, such as a methyl group, an ethyl group, a propyl group, an isopropyl group, a cyclopropyl group, a butyl group, a sec-butyl group, a tert-butyl group, a cyclobutyl group, a pentyl group, a cyclopentyl group, a hexyl group, a cyclohexyl group, a trieicosanyl group, a benzyl group, an allyl group, etc.; an aryl group, such as a phenyl group, a biphenyl group, a naphthyl group, an indenyl group, an anthracenyl group, etc.; an alkoxy group, such as a methoxy group, an ethoxy group, a propoxy group, an isopropoxy group, a cyclopropoxy group, a butoxy group, a sec-butoxy group, a tert-butoxy group, a cyclobutoxy group, a pentoxy group, a cyclopentoxy group, a hexoxy group, a cyclohexoxy group, etc.; an aryloxy group, such as a phenoxy group, a naphthoxy group, etc.
Specific examples of the organic magnesium compounds represented by the general formula (XI) include dimethoxymagnesium, diethoxymagnesium, dipropoxymagnesium, diisopropoxymagnesium, dibutoxymagneium, diphenoxymagneium, methylmagnesium bromide, ethylmagneium bromide, trimethylsilylmethylmagnesium bromide, benzylmagnesium bromide, and those derived from the above by substituting the bromide with a chloride or iodide.

The organic lithium compounds include those represented by a general formula (XII):

R¹³-Li (XII)

R¹³ in the general formula (XII) represents an organic group having from 1 to 20 carbon atoms, and may have any of a linear structure, a branched structure, a cyclic structure or an aromatic structure. Concretely, there are mentioned an alkyl group, such as a methyl group, an ethyl group, a propyl group, an isopropyl group, a cyclopropyl group, a butyl group, a sec-butyl group, a tert-butyl group, a cyclobutyl group, a pentyl group, a cyclopentyl group, a hexyl group, a cyclohexyl group, an eicosanyl group, a benzyl group, an allyl group, etc.; an aryl group, such as a phenyl group, a biphenyl group, a naphthyl group, an indenyl group, an anthracenyl group, etc.; an alkoxy group, such as a methoxy group, an ethoxy group, a propoxy group, an isopropoxy group, a cyclopropoxy group, a butoxy group, a sec-butoxy group, a tert-butoxy group, a cyclobutoxy group, a pentoxy group, a cyclopentoxy group, a hexoxy group, a cyclohexoxy group, etc.; an aryloxy group, such as a phenoxy group, a naphthoxy group, etc.; a trimethylsilylmethyl group, a triethylsilylmethyl group, a trimethylsilylethyl group, a triethylsilylethyl group, etc.
Specific examples of the organic lithium compounds represented by the general formula (XII) include methoxylithium, ethoxylithium, propoxylithium, isopropoxylithium, butoxylithium, phenoxylithium, trimethylsilylmethyllithium, methyllitnhium, ethyllithium, propyllithium, butyllithium, phenyllithium, etc.

The organic zinc compounds include those represented by a general formula (XIII):

R¹³-Zn-R¹³ (XIII)

R¹³ in the general formula (XIII) represents an organic group having from 1 to 20 carbon atoms, and may have any of a linear structure, a branched structure, a cyclic structure or an aromatic structure. Concretely, there are mentioned an alkyl group, such as a methyl group, an ethyl group, a propyl group, an isopropyl group, a cyclopropyl group, a butyl group, a sec-butyl group, a tert-butyl group, a cyclobutyl group, a pentyl group, a cyclopentyl group, a hexyl group, a cyclohexyl group, an eicosanyl group, a benzyl group, an allyl group, etc.; an aryl group, such as a phenyl group, a biphenyl group, a naphthyl group, an indenyl group, an anthracenyl group, etc.; an alkoxy group, such as a methoxy group, an ethoxy group, a propoxy group, an isopropoxy group, a cyclopropoxy group, a butoxy group, a sec-butoxy group, a tert-butoxy group, a cyclobutoxy group, a pentoxy group, a cyclopentoxy group, a hexoxy group, a cyclohexoxy group, etc.; an aryloxy group, such as a phenoxy group, a naphthoxy group, etc.
Specific examples of the organic zinc compound represented by the general formula (XIII) include dimethoxyzinc, diethoxyzinc, dipropoxyzinc, diisopropoxyzinc, dibutoxyzinc, diphenoxyzinc, dimethylzinc, diethylzinc, dipropylzinc, dibutylzinc, diphenylzinc, etc.

The component (D) is a compound capable of coordinating with the metal atom in the component (A) and represented by a general formula (XIV) and/or a general formula (XV):

Z⁵R¹⁴R¹ (XIV)

Z⁶R¹⁴R¹⁵R¹⁶ (XV)

[wherein Z⁵ represents an oxygen atom, a sulfur atom or a selenium atom; Z⁶ represents a nitrogen atom, a phosphorus atom or an arsenic atom; R¹⁴ to R¹⁶ each independently represent an organic group, and at least one of those organic groups is an organic group having at least 3 carbon atoms, and R¹⁴ to R¹⁶ may bond to each other to form a ring].

The compound represented by the general formula (XIV) and the general formula (XV) has Z⁵ or Z⁶ and therefore can coordinate with the metal atom in the component (A). The organic group for R¹⁻⁴ to R¹⁶ is preferably an organic group having from 4 to 30 carbon atoms, more preferably from 5 to 20 carbon atoms, even more preferably from 5 to 16 carbon atoms. When at least one of the organic groups is not an organic group having at least 3 carbon atoms, then the ionic active species to be formed from the component (A) and the component (B) may precipitate. When the carbon number of the organic group is more than 30, then the component (D) itself could not uniformly dissolve.
In the present invention, the component (D) is preferably a compound represented by a general formula (XVI) and/or a general formula (XVII):

Z⁷R¹⁴R¹⁵ (XVI)

Z⁸R¹⁴R¹⁵R¹⁶ (XVII)

[wherein Z⁷ represents an oxygen atom; Z⁸ represents a nitrogen atom; and R¹⁴ to R¹⁶ are the same as above].

As described above, the compound represented by the general formula (XIV) and the general formula (XV) may be good to have at least one bulky substituent (that is, an organic group having at least 3 carbon atoms), and the organic group for the other R¹⁴ to R¹⁶ may be a group having at least 3 carbon atoms, or may be a group having from 1 to 3 carbon atoms. The component (D) having coordinated with the component (A) has a bulky substituent, therefore enlarging the steric hindrance to prevent the ionized components (A) from associating together. As a result of preventing the association, no precipitate would form through aggregation, and it is presumed that a high-level catalyst concentration could be thereby attained in the present invention.
The group having from 1 to 3 carbon atoms includes, for example, a methyl group, an ethyl group, a propyl group, an isopropyl group.

The compound represented by the general formula (XIV) includes dibutyl ether, dipentyl ether, dihexyl ether, diheptyl ether, dioctyl ether, dinonyl ether, didecyl ether, diundecyl ether, didodecyl ether, ditridecyl ether, ditetradecyl ether, dipentadecyl ether, dihexadecyl ether, diheptadecyl ether, dioctadecyl ether, dinanadecyl ether, dieicosanyl ether; and compounds modified from the above-mentioned ether compounds by changing one of the two organic groups therein into any group of a methyl group, an ethyl group, a propyl group or a butyl group, methyl phenyl ether, ethyl phenyl ether, propyl phenyl ether, butyl phenyl ether, pentyl phenyl ether, hexyl phenyl ether, heptyl phenyl ether, octyl phenyl ether, nonyl phenyl ether, decyl phenyl ether, undecyl phenyl ether, dodecyl phenyl ether, tridecyl phenyl ether, tetradecyl phenyl ether, pentadecyl phenyl ether, hexadecyl phenyl ether, heptadecyl phenyl ether, octadecyl phenyl ether, nonadecyl phenyl ether, eicosanyl phenyl ether, diphenyl ether, etc.
Also mentioned are compounds having a sulfur atom or a selenium atom in place of the oxygen atom.

The compound represented by the general formula (XV) includes tributylamine, tripentylamine, trihexylamine, triheptylamine, trioctylamine, trinonylamine, tridecylamine, triundecylamine, tridodecylamine, tritridecylamine, tritetradecylamine, tripentadecylamine, trihexadecylamine, triheptadecylamine, trioctadecylamine, trinonadecylamine, trieicosanylamine, and compounds modified from the above-mentioned amine compounds by changing one or two of the three organic groups therein into any group of a methyl group, an ethyl group, a propyl group or a butyl group, N,N-dimethylaniline, N,N-diethylaniline, N,N-dipropylaniline, N,N-dibutylaniline, N,N-dipentylaniline, N,N-dihexylaniline, N,N-diheptylaniline, N,N-dioctylaniline, N,N-dinonylaniline, N,N-didecylaniline, N,N-diundecylaniline, N,N-didodecylaniline, N,N-ditridecylaniline, N,N-ditetradecylaniline, N,N-dipentadecylaniline, N,N-dihexadecylaniline, N,N-diheptadecylaniline, N,N-dioctadecylaniline, N,N-dinonadecylaniline, N,N-dieicosanylaniline, N,N,N-triphenylamine, etc.
Also mentioned are compounds having a phosphorus atom or an arsenic atom in place of the nitrogen atom.

The catalyst composition of the invention is prepared by bringing the above-mentioned components (A) to (D) into contact with each other in a hydrocarbon solvent.
The hydrocarbon solvent includes aromatic solvents, such as benzene, toluene, xylene, mesitylene, naphthalene, etc.; linear aliphatic solvents, such as hexane, heptane, etc.; alicyclic hydrocarbon solvents, such as cyclohexane, methylcyclohexane, decalin, etc.
Also mentioned are halogen-containing solvents, such as chloroform, methylene chlorine, chlorobenzene, etc. Mixture solvents of the above are also usable here.
In the catalyst composition of the present invention, even when the most harmless heptane or methylcyclohexane of those is used, it is still possible to prepare a catalyst composition having a practicable catalyst concentration.

Further, the catalyst composition of the present invention is a catalyst composition that satisfies the following (a) to (d):
(a) The concentration of the component (A) to the hydrocarbon solvent is from 1 to 100 µmol/ml.
   When the concentration of the component (A) is less than 1 µmol/ml, the storability of the catalyst composition may lower; and when more than 100 µmol/ml, the catalyst components may precipitate out.
   From the above viewpoints, the concentration is preferably from 1.5 to 50 µmol/ml, more preferably from 2 to 25 µmol/ml.
(b) The ratio of the component (B) to the component (A) [(B)/(A)] by mol is preferably from 1.0 to 5. When the molar ratio (B)/(A) is less than 1.0, then the transition metal compound of the component (A) could not be fully activated and the catalyst activity may be poor.
   When the ratio is more than 5, the catalyst components may precipitate out. From the viewpoints, the ratio is more preferably from 1.2 to 4, even more preferably from 1.5 to 3.
(c) The ratio of the component (C) to the component (A) [(C)/(A)] by mol is preferably from 1.0 to 100. When the molar ratio (C)/(A) is less than 1.0, then the transition metal compound of the component (A) could not be fully activated and the catalyst activity may be poor.
   When the ratio is more than 100, the catalyst activity may also lower. From the viewpoints, the ratio is more preferably from 2 to 50, even more preferably from 5 to 10.
(d) The ratio of the component (D) to the component (A) [(D)/(A)] by mol is preferably from 0.1 to 100. When the molar ratio (D)/(A) is less than 0.1, then the catalyst composition could not enjoy a sufficient solubility-improving effect; but when more than 100, the catalyst activity may lower.
   From the viewpoints, the ratio is more preferably from 1 to 50, even more preferably from 1.5 to 20.

The preparation method for the catalyst composition of the present invention is not specifically defined. A preferred addition order is an order of the component (C), the component (A), the component (B) and the component (D), or an order of the component (C), the component (A), the component (D) and the component (B).
Concretely, for example, the component (C) is added to a hydrocarbon solvent, and then the component (A) is added thereto and fully stirred, and thereafter the component (B) and the component (D) are added thereto and fully stirred to prepare the catalyst composition.
In the above-mentioned preparation method, in case where a precipitate of a chlorine compound is formed, it may be separated through filtration to give a catalyst composition not containing a chlorine compound.
When a precipitate of a chlorine compound is not separated, a catalyst composition not containing a chlorine compound could not be obtained; however, a high-concentration and high-activity catalyst composition and further a high-concentration and high-activity catalyst composition containing a nonaromatic solvent can be obtained.

In the above-mentioned preparation method, in case where the solvent is an aliphatic solvent, such as heptane or the like, the stirring condition after the addition of the component (A) is generally at from 30 to 100°C and for from 0.5 to 2 hours, preferably for from 1 to 1.5 hours. Satisfying the condition, the subsequent reaction process can go on efficiently.
The stirring time after the addition of the component (D) is generally from 1 to 10 hours, preferably from 1.5 to 4 hours, more preferably from 2 to 3 hours.
When the stirring time is too short, then the catalyst components could not be fully activated; but when too long, the catalyst components may be deactivated.
In this, the temperature is generally from 30 to 100°C, preferably from 5 to 90°C, more preferably from 60 to 85°C.
When the temperature is too low, then the catalyst component could not be fully activated; but when too high, the catalyst component may be deactivated.

In preparing the catalyst composition of the present invention, hydrogen of from 0.005 to 1.0 MPa may be made to coexist in the system.
Further, in preparing the catalyst composition, one or more unsaturated hydrocarbon compounds selected from α-olefins, internal olefins and polyenes may be made to coexist in the system.
The internal olefins include 2-butene, 2-pentene, 2-hexene, 3-hexene, 2-heptene, 3-heptene, 2-octene, 3-octene, 4-octene, 5-decene, etc. The polyenes include diene compounds, such as 1,3-butadiene, 1,5-hexadiene, 1,7-octadiene, etc.
The α-olefins include propylene, 1-butene, 1-pentene, 4-methyl-1-pentene, 1-hexane, 1-octene, 1-decene, 1-dodecene, 1-tetradecene, 1-hexadecene, 1-octadecene, 1-eicosene, etc.

The above-mentioned component (C) may be further added to the catalyst composition of the present invention as obtained by bringing the component (A), the component (B), the component (C) and the component (D) into contact with each other.
Preferred examples of the component (C) include trialkylaluminiums, such as trimethylaluminium, triethylaluminium, triisobutylaluminium, trioctylaluminium, etc.; alumoxanes, such as tetraisobutylalumoxane, methylalumoxane, isobutylalumoxane, etc.

The polymerization reaction to use the catalyst composition of the present invention includes homopolymerization of olefins, and copolymerization of olefins and any other olefins.
The olefins are not specifically defined. Preferred are ethylene and α-olefins having from 3 to 20 carbon atoms.
The α-olefins of the type include, for example, α-olefins, such as propylene, 1-butene, 1-pentene, 1-hexene, 1-heptane, 1-octene, 1-nonene, 1-decene, 4-phenyl-1-butene, 6-phenyl-1-hexene, 3-methyl-1-butene, 4-methyl-1-butene, 3-methyl-1-pentene, 4-methyl-1-hexene, 5-methyl-1-hexene, 3,3-dimethyl-1-pentene, 3,4-dimethyl-1-pentene, 4,4-dimethyl-1-pentene, vinylcyclohexane, etc.; dienes, such as 1,3-butadiene, 1,4-pentadiene, 1,5-hexadiene, etc.; halogen-substituted α-olefins, such as hexafluoropropane, tetrafluoroethylene, 2-fluoropropene, fluoroethylene, 1,1-difluoroethylene, 3-fluoropropene, trifluoroethylene, 3,4-dichloro-1-butene, etc.; cyclic olefins, such as cyclopentene, cyclohexene, norbornene, 5-methylnorbornene, 5-ethylnorbornene, 5-propylnorbornene, 5,6-dimethylnorbornene, 5-benzylnorbornene, etc.; and as styrenic ones, there are mentioned styrene; alkylstyrenes, such as p-methylstyrene, p-ethylstyrene, p-propylstyrene, p-isopropylstyrene, p-butylstyrene, p-tert-butylstyrene, p-phenylstyrene, o-methylstyrene, o-ethylstyrene, o-propylstyrene, o-isopropylstyrene, m-methylstyrene, methylstyrene, m-isopropylstyrene, m-butylstyrene, mesitylstyrene, 2,4-dimethylstyrene, 2,5-dimethylstyrene, 3,5-dimethylstyrene, etc.; alkoxystyrenes, such as p-methoxystyrene, o-methoxystyrene, m-methoxystyrene, etc.; halogenostyrenes, such as p-chlorostyrene, m-chlorostyrene, o-chlorostyrene, p-bromostyrene, m-bromostyrene, o-bromostyrene, p-fluorostyrene, m-fluorostyrene, o-fluorostyrene, o-methyl-p-fluorostyrene, etc.; further trimethylsilylstyrene, vinylbenzoates, divinylbenzene, etc.
The other olefins may be suitably selected from the above-mentioned olefins.
In the present invention, one alone or two or more different types of the above-mentioned olefins may be either singly or as combined.
In case of copolymerization of two or more olefins, the above-mentioned olefins may be combined in any desired manner.
The molar ratio of the olefins for use in the present invention to the component (A) in the polymerization catalyst (monomer/component (A)) is preferably from 1 to 10⁸, more preferably from 100 to 10⁵.

Not specifically defined, the polymerization catalyst includes, for example, aromatic solvents, such as benzene, toluene, xylene, ethylbenzene, etc.; alicyclic hydrocarbon solvents, such as cyclopentane, cyclohexane, methylcyclohexane, decalin, tetralin, etc.; aliphatic solvents, such as pentane, hexane, heptane, octane, etc.; halogen-containing solvents, such as chloroform, dichloromethane, etc.
Of those, preferred are alicyclic hydrocarbon solvents and aliphatic solvents.
One alone or two or more different types of these solvents may be used either singly or as combined.

The temperature in the above-mentioned polymerization reaction is generally from -100 to 250°C, preferably from -50 to 200°C, more preferably from 0 to 130°C.
The pressure is preferably from normal pressure to 20 MPa (gauge), more preferably from normal pressure to 10 MPa (gauge). The polymerization time is generally from 5 minutes to 15 hours.
The method for controlling the molecular weight of the olefin polymer includes selection of the type and the amount to be used of the catalyst components and the polymerization temperature, and further polymerization in the presence of hydrogen, etc.

### EXAMPLES

Next, the present invention is described in more detail with reference to Examples; however, the present invention is not whatsoever limited by these Examples.

### [Production Example 1] Synthesis of (1,2'-dimethylsilylene)(2,1'-dimethylsilylene)-bis(3-trimethylsilylmethylindenyl)zirconium dichloride

In a Schlenk bottle, 3.0 g (6.97 mmol) of (1,2'-dimethylsilylene)(2,1'-dimethylsilylene)-bis(indene) lithium was dissolved in 50 ml of tetrahydrofuran (THF), and cooled to -78°C. 2.1 ml (14.2 mmol) of iodomethyltrimethylsilane was gradually dropwise added thereto and stirred for 12 hours at room temperature.
The solvent was evaporated away, 50 ml of diethyl ether was added to the residue and washed with a saturated ammonium chloride solution.
After processed for liquid-liquid separation, the organic phase was dried to remove the solvent to give 3.04 g (5.88 mmol) of (1,2`-dimethylsilylene)(2,1'-dimethylsilylene)-bis(3-trimethylsilylmethylindene) (yield 84%).
Next, 3.04 g (5.88 mmol) of (1,2'-dimethylsilylene)(2,1'-dimethylsilylene)-bis(3-trimethylsilylmethylindene) obtained in the above and 50 ml of diethyl ether were put into a Schlenk bottle in a nitrogen current atmosphere.
This was cooled to -78°C, and a hexane solution of n-butyllithium (n-BuLi) (1.54 mol/L, 7.6 ml (11.7 mmol)) was dropwise added thereto.
This was heated up to room temperature and stirred for 12 hours, and diethyl ether was evaporated away.
The resulting solid was washed with 40 ml of hexane to give the lithium salt as a diethyl ether adduct in an amount of 3.06 g (5.07 mmol) (yield 73%).
¹H-NMR (90 MHz, THF-d₈) gave the following results. δ: 0.04 (s, 18H, trimethylsilyl), 0.48 (s, 12H, dimethylsilylene), 1.10 (t, 6H, methyl), 2.59 (s, 4H, methylene), 3.38 (q, 4H, methylene), 6.2-7.7 (m, 8H, Ar-H)

In a nitrogen current atmosphere, the lithium salt obtained in the above was dissolved in 50 ml of toluene.
This was cooled to -78°C, and a toluene (20 ml) suspension of 1.2 g (5.1 mmol) of zirconium tetrachloride that had been previously cooled to -78°C was dropwise added thereto.
After the addition, this was stirred at room temperature for 6 hours. The solvent was evaporated away from the reaction solution.
The resulting residue was recrystallized from dichloromethane to give 0.9 g (1.33 mmol) of (1,2`-dimethylsilylene)(2,1'-dimethylsilylene)-bis(3-trimethylsilylmethylindenyl)zirconium dichloride (yield 26%).
¹H-NMR (90 MHz, CDCl₃) gave the following results. δ: 0.0 (s, 18H, trimethylsilyl), 1.02, 1.12 (s, 12H, dimethylsilylene), 2.51 (dd, 4H, methylene), 7.1-7.6 (m, 8H, Ar-H)

### [Example 1]

1.5 g (2.2 mmol) of (1,2'-dimethylsilylene)(2,1`-dimethylsilylene)-bis(3-trimethylsilylmethylindenyl)zirconium dichloride obtained in Production Example 1 and 70 ml of diethyl ether as a solvent for pretreatment were put into a 100-ml Schlenk, and cooled to -78°C.
4.8 mmol (0.98 mol/L hexane solution, 4.9 ml) of trimethylsilylmethyllithium (by Wako Pure Chemicals) was dropwise added thereto, and after addition, this was stirred at room temperature for 3 hours.
The supernatant was removed from the formed precipitate of lithium chloride, and diethyl ether was evaporated away to give 1.84 g (2.27 mmol) of a yellow to orange solid.
1.84 g (2.27 mmol) of the alkyl complex from which the lithium chloride (chloride compound) had been removed, and, as a solvent for catalyst preparation, 1.85 g (2.3 mmol) of dimethylanilinium tetrakispentafluorophenylborate were brought into contact with each other in 227 ml of heptane, and further, as the component (D), 2.5 ml (6.9 mmol) of dodecyl ether was added thereto.
The mixture was stirred at 80°C for 2 hours to give a uniform solution.

### [Example 2]

In a 500-ml Schlenk bottle, 1000 µmol (420 mg) of bis(2-methylindenyl)zirconium dichloride (by Strem Chemicals), 46.2 ml of metaxylene, and 7.5 mmol (2 mol/L heptane solution, 3.8 ml) of triisobutylaluminium were put, and fully stirred, and then 1.5 mmol (50 ml) of 30 µmol/ml metaxylene suspension of dimethylanilinium tetrakispentafluorophenylborate was added thereto and stirred at room temperature for 30 minutes, thereby giving a dark purple-red solution and a purple-red oily precipitate formed at the bottom of the vessel.
4.0 mmol (2.1 g) of dioctadecyl ether was added thereto and stirred at room temperature, whereupon the oily precipitate immediately dissolved to give a uniform purple-red solution.

### [Example 3]

In a 500-ml Schlenk bottle, 1000 µmol (419 mg) of ethylenebis(indenyl)zircanium dichloride (by Strem Chemicals), 46.2 ml of metaxylene, and 7.5 mmol (2 mol/L heptane solution, 3.8 ml) of triisobutylaluminium were put, and fully stirred, and then 1.5 mmol (50 ml) of 30 µmol/ml metaxylene suspension of dimethylanilinium tetrakispentafluorophenylborate was added thereto and stirred at room temperature for 30 minutes, thereby giving a dark purple-red solution and a purple-red oily precipitate formed at the bottom of the vessel.
4.0 mmol (2.1 g) of dioctadecyl ether was added thereto and stirred at room temperature, whereupon the oily precipitate immediately dissolved to give a uniform purple-red solution.

### [Example 4]

In a 500-ml Schlenk bottle, 13 ml of metaxylene, 7.5 mmol (2 mol/L heptane solution, 3.8 ml) of triisobutylaluminium, 1.0 mmol (33 ml) of 30 µmol/ml metaxylene suspension of (1,2'-dimethylsilylene)(2,1'-dimethylsilylene)-bis(3-trimethylsilylmethylindenyl)zirconium dichloride obtained in Production Example 1, and 1.5 mmol (50 ml) of 30 µmol/ml metaxylene suspension of dimethylanilinium tetrakispentafluorophenylborate were put, and stirred at room temperature for 30 minutes to give a dark purple-red solution and a purple-red oily precipitate formed at the bottom of the vessel.
4.8 mmol (1.8 ml) of didecyl ether was added thereto and stirred at room temperature, whereupon the oily precipitate immediately dissolved to give a uniform purple-red solution.

### [Example 5]

In a 500-ml Schlenk bottle, 13 ml of metaxylene, 7.5 mmol (2 mol/L heptane solution, 3.8 ml) of triisobutylaluminium, 1.0 mmol (33 ml) of 30 µmol/ml metaxylene suspension of (1,2'-dimethylsilylene)(2,1'-dimethylsilylene)-bis(3-trimethylsilylmethylindenyl)zirconium dichloride obtained in Production Example 1, and 1.5 mmol (50 ml) of 30 µmol/ml metaxylene suspension of dimethylanilinium tetrakispentafluorophenylborate were put, and stirred at room temperature for 30 minutes to give a dark purple-red solution and a purple-red oily precipitate formed at the bottom of the vessel.
4.8 mmol (0.61 ml) of N,N-dimethylaniline was added thereto and stirred at room temperature, whereupon the oily precipitate immediately dissolved to give a uniform purple-red solution.

### [Example 6]

In a 500-ml Schlenk bottle, 4 mmol (2.7 g) (1,2'-dimethylsilylene)(2,1'-dimethylsilylene)-bis(3-trimethylsilylmethylindenyl)zirconium dichloride obtained in Production Example 1 was put, and further, 85 ml of metaxylene, 30 mmol (2 mol/L heptane solution, 15 ml) of triisobutylaluminium, and 6.0 mmol (4.8 g) of dimethylanilinium tetrakispentafluorophenylborate were added thereto and stirred at room temperature for 30 minutes to give a dark purple-red solution and a purple-red oily precipitate formed at the bottom of the vessel.
4.8 mmol (2.1 g) of dioctadecyl ether was added thereto and stirred at room temperature, whereupon the oily precipitate immediately dissolved to give a uniform purple-red solution.

### [Example 7]

In a 1-L autoclave, 221 ml of heptane, 4.8 mmol (2 mol/L heptane solution) of triisobutylaluminium, and 0.6 mmol (30 ml) of 20 µmol/ml heptane suspension of (1,2'-dimethylsilylene)(2,1'-dimethylsilylene)-bis(3-trimethylsilylmethylindenyl)zirconium dichloride obtained in Production Example 1 were put, and stirred at 80°C for 1 hour.
Subsequently, 0.9 mmol (45 ml) of 20 µmol/ml heptane solution of dimethylanilinium tetrakispentafluorophenylborate and 3.8 mmol (2.0 ml) of didecyl ether were added thereto and stirred at 80°C for 3 hours, and the uniform black-yellow solution thus obtained was transferred into a Schlenk bottle and stored therein.

### [Example 8]

In a 1-L autoclave, 290 ml of methylcyclohexane, 9.0 mmol (2 mol/L heptane solution) of triisobutylaluminium, and 1.2 mmol (0.81 g) of (1,2'-dimethylsilylene)(2,1'-dimethylsilylene)-bis(3-trimethylsilylmethylindenyl)zirconium dichloride obtained in Production Example 1 were put, and stirred at 80°C for 1 hour.
Subsequently, 1.8 mol (1.4 g) of dimethylanilinium tetrakispentafluorophenylborate and 12 mmol (4.4 ml) of didecyl ether were added thereto and stirred at 80°C for 3 hours, and the uniform black-yellow solution thus obtained was transferred into a Schlenk bottle and stored therein.

### [Comparative Example 1]

A catalyst composition was prepared in the same manner as in Example 1 except that diethyl ether was used in place of didecyl ether. A precipitate formed at the bottom of the vessel.

### [Comparative Example 2]

A catalyst composition was prepared in the same manner as in Example 2 except that dioctadecyl ether was not added. An oily precipitate formed at the bottom of the vessel.

### [Comparative Example 3]

A catalyst composition was prepared in the same manner as in Example 3 except that dioctadecyl ether was not added. An oily precipitate formed at the bottom of the vessel.

### [Comparative Example 4]

A catalyst composition was prepared in the same manner as in Example 4 except that diethyl ether was used in place of didecyl ether.
An oily precipitate formed at the bottom of the vessel.

### [Comparative Example 5]

A catalyst composition was prepared in the same manner as in Example 4 except that didecyl ether was not added. An oily precipitate formed at the bottom of the vessel.

### [Comparative Example 6]

A catalyst composition was prepared in the same manner as in Example 7 except that didecyl ether was not added. A precipitate formed at the bottom of the vessel.

### [Comparative Example 7]

A catalyst composition was prepared in the same manner as in Example 8 except that didecyl ether was not added. A precipitate formed at the bottom of the vessel.

The results in Examples 1 to 8 and Comparative Examples 1 to 7 are shown in Table 1-1 and Table 1-2.
The abbreviations used in the Tables are shown below.
[Component (A)]
   1: Bis(2-methylindenyl)zirconium dichloride
   2 : Ethylenebis(indenyl)zirconium dichloride
   3: (1,2`-Dimethylsilylene)(2,1'-dimethylsilylene)-bis(3-trimethylsilylmethylindenyl)zirconium dichloride
[Component (D)]
   1: Dioctadecyl ether
   2: Didecyl ether
   3: Diethyl ether
   4: N,N-dimethylaniline
[Main Solvent]
   1: Metaxylene
   2: Heptane
   3: Methylcyclohexane
[Solubility Evaluation Standards]
   A: Uniform solution formed.
   B: Catalyst component precipitated.
[Chlorine Compound in Catalyst Composition]
   No: In contact operation of the components (A), (B) and (C), no chlorine compound formed in the catalyst composition, or the formed chlorine compound was removed from the catalyst composition.
   Yes: In contact operation of the components (A), (B) and (C), the formed chlorine compound was not removed from the catalyst composition.

[Table 1]

**Table 1-1**

| | | Example 1 | Comparative Example 1 | Example 2 | Comparative Example 2 | Example 3 | Comparative Example 3 | Example 4 | Comparative Example 4 | Comparative Example 5 |
|---|---|---|---|---|---|---|---|---|---|---|
| Component (A) | | 3 | 3 | 1 | 1 | 2 | 2 | 3 | 3 | 3 |
| Component (B) | | dimethylanilinium tetrakispentafluorophenylborate | | | | | | | | |
| Component (C) | | trimethylsilylmethyllithium | | triisobutylaluminium | | | | | | |
| Component (D) | | 2 | 3 | 1 | - | 1 | - | 2 | 3 | - |
| Molar Ratio of Catalyst Components | (B)/(A) | 1.01 | 1.01 | 1.5 | 1.5 | 1.5 | 1.5 | 1.5 | 1.5 | 1.5 |
| | (C)/(A) | 2.2 | 2.2 | 7.5 | 7.5 | 7.5 | 7.5 | 7.5 | 7.5 | 7.5 |
| | (D)/(A) | 3 | 3 | 4.0 | 0.0 | 4.0 | 0.0 | 4.8 | 4.8 | 0.0 |
| Main Solvent | | 2 | 2 | 1 | 1 | 1 | 1 | 1 | 1 | 1 |
| Zirconium Concentration (µmol/ml) | | 10 | 10 | 10 | 10 | 10 | 10 | 10 | 10 | 10 |
| Solubility (catalyst component precipitation) | | A | B | A | B | A | B | A | B | B |
| Chlorine Compound in Catalyst Composition | | no | no | yes | yes | yes | yes | yes | yes | yes |

[Table 2]

**Table 1-2**

| | | Example 5 | Example 6 | Example 7 | Comparative Example 6 | Examples 8 | Comparative Example 7 |
|---|---|---|---|---|---|---|---|
| Component (A) | | 3 | 3 | 3 | 3 | 3 | 3 |
| Component (B) | | dimethylanilinium tetrakispentafluorophenylborate | | | | | |
| Component (C) | | triisobutylaluminium | | | | | |
| Component (D) | | 4 | 2 | 2 | - | 2 | - |
| Molar Ratio of Catalyst Components | (B)/(A) | 1.5 | 1.5 | 1.5 | 1.5 | 1.5 | 1.5 |
| | (C)/(A) | 7.5 | 7.5 | 8.0 | 8.0 | 8.3 | 8.3 |
| | (D)/(A) | 4.8 | 1.5 | 6.3 | 0.0 | 10.0 | 0.0 |
| Main Solvent | | 1 | 1 | 2 | 2 | 3 | 3 |
| Zirconium Concentration (µmol/ml) | | 10 | 40 | 2 | 2 | 4 | 4 |
| Solubility (catalyst component precipitation) | | A | A | A | B | A | B |
| Chlorine Compound in Catalyst Composition | | yes | yes | yes | yes | yes | yes |

### [Propylene Polymerization]

In 1-L autoclave, 400 ml of heptane and 0.4 mmol (2 mol/L heptane solution) of triisobutylaluminium were put, and fully stirred, and then the catalyst composition prepared in Examples 1 to 8 and Comparative Examples 1 to 7 was put thereinto. (The amount of the catalyst was 1.0 µmol in Example 2 and Comparative Example 2, and was 0.2 µmol in the others.)
With stirring, hydrogen was introduced in the autoclave in order to have a partial pressure of 0.04 MPa therein, and then, while propylene was kept introduced into it, the total pressure was controlled to be 0.75 MPa and the reaction temperature was to be 70°C.
After reacted for 19 minutes from the start of heating the system (but in Examples 2 and 3 and Comparative Examples 2 and 3, the reaction time was 30 minutes), a suitable amount of ethanol was put into the autoclave to deactivate the catalyst.
The resulting polymer solution was dried to give polypropylene. The results are shown in Table 2-1 and Table 2-2.

### [Octadecene Polymerization]

In 1-L autoclave, 400 ml of octadecene and 1.0 mmol (2 mol/L heptane solution) of triisobutylaluminium were put, and fully stirred, and then 2.0 µmol of the catalyst composition prepared in Example 4 was put thereinto.
With stirring, hydrogen was kept continuously introduced in the autoclave in order to have a partial pressure of 0.15 MPa therein, and this was heated up to 90°C.
After 1 hour from the start of heating the system, a suitable amount of ethanol was put into the autoclave to deactivate the catalyst. The resulting polymer solution was put into a large quantity of methyl ethyl ketone to thereby precipitate the polymer component therein.
The precipitation operation was repeated three times, and the resulting polymer was dried by heating to give polyoctadecene. The results are shown in Table 2-2.

[Table 3]

**Table 2-1**

| | Example | | | | | | | |
|---|---|---|---|---|---|---|---|---|
| | 9 | 10 | 11 | 12 | 13 | 14 | 15 | 16 |
| Catalyst Composition | Example 1 | Example 2 | Example 3 | Example 4 | Example 5 | Example 6 | Example 7 | Example 8 |
| (amount added: µmol) | 0.2 | 10 | 0.2 | 0.2 | 0.2 | 0.2 | 0.2 | 0.2 |
| Monomer | propylene | propylene | propylene | propylene | propylene | propylene | propylene | propylene |
| Reaction Time (min) | 30 | 30 | 30 | 19 | 19 | 19 | 19 | 19 |
| Activity (kg-polymer/g-Zr) | 5100 | 150 | 3700 | 5600 | 6500 | 5700 | 5100 | 4700 |

[Table 4]

**Table 2-2**

| | Comparative Example | | | | | | | Example 17 |
|---|---|---|---|---|---|---|---|---|
| | 8 | 9 | 10 | 11 | 12 | 13 | 14 | |
| Catalyst Composition | Comparative Example 1 | Comparative Example 2 | Comparative Example 3 | Comparative Example 4 | Comparative Example 5 | Comparative Example 6 | Comparative Example 7 | Example 4 |
| (amount added: µmol) | 0.2 | 1.0 | 0.2 | 0.2 | 0.2 | 0.2 | 0.2 | 2.0 |
| Monomer | propylene | propylene | propylene | propylene | propylene | propylene | propylene | octadecene |
| Reaction Time (min) | 30 | 30 | 30 | 19 | 19 | 19 | 19 | 19 |
| Activity (kg-polymer/g-Zr) | 1200 | 100 | 2850 | 3700 | 3900 | 900 | 1100 | 1140 |

### INDUSTRIAL APPLICABILITY

According to the present invention, there is provided a catalyst composition using a metallocene compound or the like as the transition metal compound therein, which enables a high catalyst concentration.
Using the catalyst composition makes it possible to reduce the amount of the aromatic solvent to be used therein, makes it possible to prepare a catalyst using a nonaromatic solvent, and makes it possible to reduce the amount of the aromatic compound to remain in an olefin polymer. In recycling the solvent in the composition, the load in the step of separating the aromatic solvent therein can be reduced.

## Claims

1. A catalyst composition prepared by bringing the following components (A) to (D) into contact with each other in a hydrocarbon solvent:
(A) A transition metal compound,
(B) A solid boron compound capable of forming an ion pair with the component (A),
(C) An organometallic compound,
(D) A compound capable of coordinating with the metal atom in the component (A) and represented by a general formula (XIV) and/or a general formula (XV):
Z⁵R¹⁴R¹⁵ (XIV)
Z⁶R¹⁴R¹⁵R¹⁶ (XV)
[wherein Z⁵ represents an oxygen atom, a sulfur atom or a selenium atom; Z⁶ represents a nitrogen atom, a phosphorus atom or an arsenic atom; R¹⁴ to R¹⁶ each independently represent an organic group, and at least one of those organic groups is an organic group having at least 3 carbon atoms, and R¹⁴ to R¹⁶ may bond to each other to form a ring].

2. The catalyst composition according to claim 1, wherein:
the concentration of the component (A) to the hydrocarbon solvent is from 1 to 100 µmol/ml,
the ratio of the component (B) to the component (A) [(B)/(A)] by mol is from 1.0 to 5,
the ratio of the component (C) to the component (A) [(C)/(A)] by mol is from 1.0 to 100, and
the ratio of the component (D) to the component (A) [(D)/(A)] by mol is from 0.1 to 100.

3. The catalyst composition according to claim 1 or 2, wherein the component (D) is a compound represented by a general formula (XVI) and/or a general formula (XVII):
Z⁷R¹⁴R¹⁵ (XVI)
Z⁸-R¹⁴R¹⁵R¹⁶ (XVII)
[wherein Z represents an oxygen atom; Z⁸ represents a nitrogen atom; and R¹⁴ to R¹⁶ have the same meanings as above].

4. The catalyst composition according to any of claims 1 to 3, wherein the component (A) is a double crosslinked metallocene complex represented by a general formula (I): 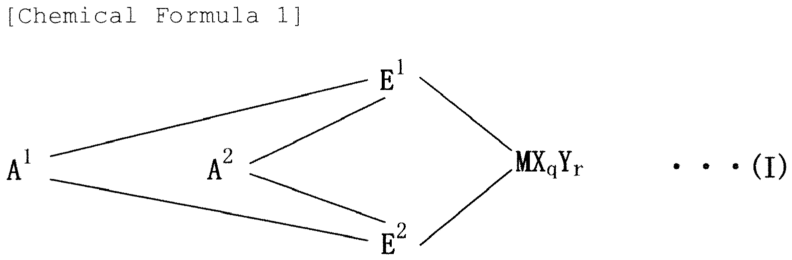 [wherein M represents titanium, zirconium or hafnium; E¹ and E² each represent a ligand comprising a substituted indenyl group and forms a crosslinked structure via A¹ and A², and these may be the same or different; X represents a σ-bonding ligand, and in case where the formula has multiple X's, the multiple X's may be the same or different, and may crosslink with any other X, E¹, E² or Y; Y represents a Lewis base, and in case where the formula has multiple Y's, the multiple Y's may be the same or different, and may crosslink with any other Y, E¹, E² or X; A¹ and A² each are a divalent crosslinking group that bonds the two ligands, representing a hydrocarbon group having from 1 to 20 carbon atoms, and these may be the same or different; q is an integer of from 1 to 5, indicating [(atomic valence of M) - 2]; and r indicates an integer of from 0 to 3], the component (C) is an organic aluminium compound and/or an organic lithium compound, and the component (D) is a compound represented by a general formula (XVI):
Z⁷R¹⁴R¹⁵ (XVI)
[wherein Z⁷ represents an oxygen atom; and R¹⁴ and R¹⁵ have the same meanings as above].

5. The catalyst composition according to any of claims 1 to 4, from which a chlorine compound has been removed.

6. A method for producing an olefin polymer, which comprises homopolymerization of an olefin or copolymerization of an olefin with any other olefin and/or other monomer, in the presence of the catalyst composition of any of claims 1 to 5.
